**Europäisches Patentamt**

**European Patent Office**

**Office européen des brevets**

(11) Veröffentlichungsnummer: **0 232 673**
**B1**

(12) # EUROPÄISCHE PATENTSCHRIFT

(45) Veröffentlichungstag der Patentschrift:
**03.05.89**

(51) Int. Cl.⁴: **B65G 47/46**

(21) Anmeldenummer: **86730099.8**

(22) Anmeldetag: **26.06.86**

(54) **Förderanlage.**

(30) Priorität: **10.02.86 DE 3604561**

(43) Veröffentlichungstag der Anmeldung:
**19.08.87 Patentblatt 87/34**

(45) Bekanntmachung des Hinweises auf die Patenterteilung:
**03.05.89 Patentblatt 89/18**

(84) Benannte Vertragsstaaten:
**AT BE CH DE FR GB IT LI NL SE**

(56) Entgegenhaltungen:
**US-A- 3 926 298**
**US-A- 4 328 889**

(73) Patentinhaber: **MANNESMANN Aktiengesellschaft,
Mannesmannufer 2, D-4000 Düsseldorf 1(DE)**

(72) Erfinder: **Mertz, Otto, Obere Mühlstrasse 30,
D-6100 Darmstadt 12(DE)**
Erfinder: **Jahns, Werner, Dipl.-Ing., Allenseestrasse 31,
D-6453 Seligenstadt(DE)**

(74) Vertreter: **Meissner, Peter E., Dipl.-Ing. et al,
Patentanwälte Dipl.-Ing. Walter Meissner Dipl.-Ing.
Peter E. Meissner Dipl.-Ing. Hans-Joachim Presting
Herbertstrasse 22, D-1000 Berlin 33(DE)**

**Beschreibung**

Die Erfindung betrifft eine Förderanlage mit von einem Hauptförderer abzweigenden Sortierförderern und in dem Hauptförderer vor den Sortierförderern angeordneten, heb- und senkbaren, in Ausschleusrichtung weisenden Ausschleusscheiben.

Bei einer Förderanlage dieser Art nach der US-PS 4 328 889 sind die Ausschleusscheiben in eine Richtung fixiert, so daß an einem Hauptförderer nicht sich gegenüberliegende Sortierförderer angeschlossen sein können, was jedoch oft wünschenswert ist.

Aufgabe der Erfindung ist es daher, eine Förderanlage der eingangs beschriebenen Art so zu gestalten, daß das Ausschleusen des Fördergutes vom Hauptförderer wahlweise nach der einen oder anderen Seite möglich ist. Diese Aufgabe wird dadurch gelöst, daß jede der Ausschleusscheiben mit ihrer Achse an einer geneigten und schräg nach unten abgebogenen Schwenk-Hub-Stange gelagert ist, die drehbar und axial unverschiebbar in einer Lagerung angeordnet ist. Durch Drehen dieser Schwenk-Hub-Stange, die vorzugsweise in Förderrichtung geneigt und vermindernd ansteigend abgekröpft ist, gelangt die Ausschleusscheibe von der unteren Stellung in die höher liegende Ausschleusstellung. Wenn kein Fördergut ausgeschleust werden soll, liegt die Ausschleusscheibe mit ihrer Oberkante in Höhe der Förderfläche oder geringfügig darunter. Je nach Bewegungsrichtung der Schwenkverbindung wird die Schwenk-Hub-Stange in die eine oder andere Richtung verdreht und hebt dabei die Ausschleusscheibe, wobei diese gleichzeitig in die Abförderrichtung des auszuschleusenden Fördergutes verschwenkt wird.

Vorzugsweise sind mehrere Schwenk-Hub-Stangen quer zur Förderrichtung nebeneinander in dem Hauptförderer angeordnet und haben nach vorne und/oder hinten gerichtete Hebelarme für den Angriff einer quer zum Hauptförderer liegenden, gemeinsamen Schwenkverbindung, die zwei die Hebel einer Reihe miteinander verbindende, vorgespannte Riemen sein können. Einer der Hebel ist mit einem in beide Richtungen arbeitenden Stellmotor verbunden.

Die Koppelstange ist in weiterer Ausgestaltung der Erfindung über einen Mitnehmerstift mit einem ein Dreieck bildenden Eckhebel verbunden, der neben den Schwenkwellen mit einem senkrechten Lagerbolzen an einem Lagerträger gelagert ist und an dem eine Kolbenstange eines Stellmotors angreift. Dieser ist mit seiner Längsachse parallel zum Hauptförderer so angeordnet, daß bei halb ausgefahrener Kolbenstange Lagerbolzen und Mitnehmerstift des Eckhebels zusammen mit der Schwenkwelle und der Befestigung seines Hebelarmes an der Koppelstange ein Rechteck bilden. Beim Einziehen oder vollen Ausfahren der Kolbenstange wird dieses Rechteck zu einem Parallelogramm verschoben, wobei alle Austragscheiben angehoben werden.

Der Antrieb der Austragscheiben erfolgt vom Förderband aus, das um eine Umlenktreibrolle geführt ist. Diese hat auf ihrer Welle eine Treibscheibe für einen elastischen Treibgurt, der beim Anheben einer mit den Austragscheiben in Verbindung stehenden Scheibe gedehnt wird.

In weiterer Ausgestaltung der Erfindung kann vor jedem Sortierförderer eine Austragscheibe neben der Förderbahn angeordnet sein. Sie reicht aus, wenn das Fördergut auf der auszuschleusenden Seite über das Förderband hinausragt und nach einer Bewegung durch die Austragscheibe von einer Mitnehmerrolle des Sortierförderers weiterbewegt wird. Das Förderband kann auch in zwei Seitenstreifen unterteilt sein, zwischen denen nach beiden Seiten schwenkbare Austragscheiben angeordnet sein können. In allen Fällen können die Austragscheiben durch über diesen angeordnete Friktionsscheiben unterstützt werden, deren Ausschleusrichtung mit denen der Austragscheiben übereinstimmt. Die Austragscheiben sind vorzugsweise entgegen der Kraft von Federn heb- und senkbar angeordnet, damit etwaige Dickenunterschiede der Fördergüter ausgeglichen werden.

Mehrere Ausführungsbeispiele der Erfindung sind in den Zeichnungen dargestellt und im folgenden erläutert. Es zeigen:

Fig. 1 eine Draufsicht auf einen Teil einer Förderanlage,
Fig. 2 einen Längsschnitt durch Fig. 1,
Fig. 3 einen Ausschnitt aus Fig. 2 in größerem Maßstab,
Fig. 4 eine Stirnansicht von den Austragscheiben mit deren Schwenkvorrichtung aus Fig. 3,
Fig. 5 den Schnitt V–V durch die Fig. 4,
Fig. 6 eine andere Förderanlage mit neben dem Hauptförderer angeordneten Austragscheiben,
Fig. 7 den Schnitt VII–VII durch die Fig. 6,
Fig. 8 eine Draufsicht auf eine Förderanlage mit geteiltem Förderband,
Fig. 9 eine andere Schwenkvorrichtung.

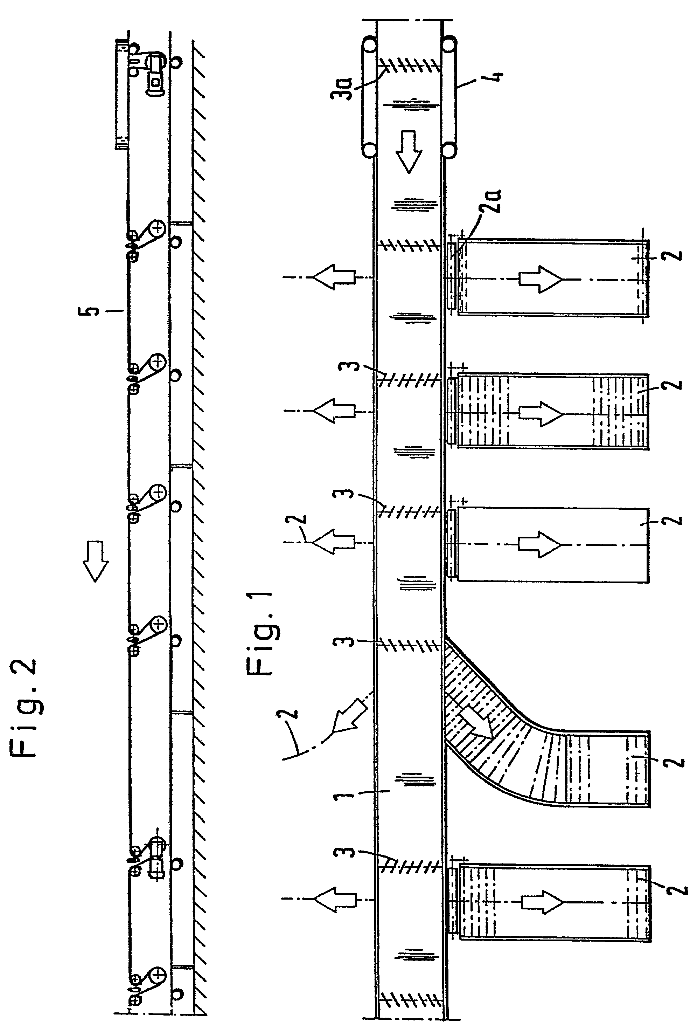

Beim Ausführungsbeispiel nach den Fig. 1 und 2 zweigen von einem Hauptförderer 1 nach beiden Seiten Sortierförderer 2 ab, die in einer Richtung lediglich mit Pfeilen angedeutet sind. Den Sortierförderern 2 ist, wenn es für das Fördergut erforderlich ist, eine angetriebene Mitnehmerrolle 2a vorgelagert, die eine Oberfläche mit großem Reibwert haben kann und zur Erhöhung der Mitnahmewirkung auch etwas über die Oberfläche des Förderbandes 5 des Hauptförderers 1 hinausragen kann. Vor den Sortierförderern 2 sind Ausschleuseinrichtungen mit heb- und senkbaren Austragscheiben 3 angeordnet; die Austragscheiben 3a zwischen den Seitenführungen 4 am Anfang der Förderanlage sind zum Vorsortieren des Fördergutes vorgesehen und leiten es gegen eine der Seitenführungen 4.

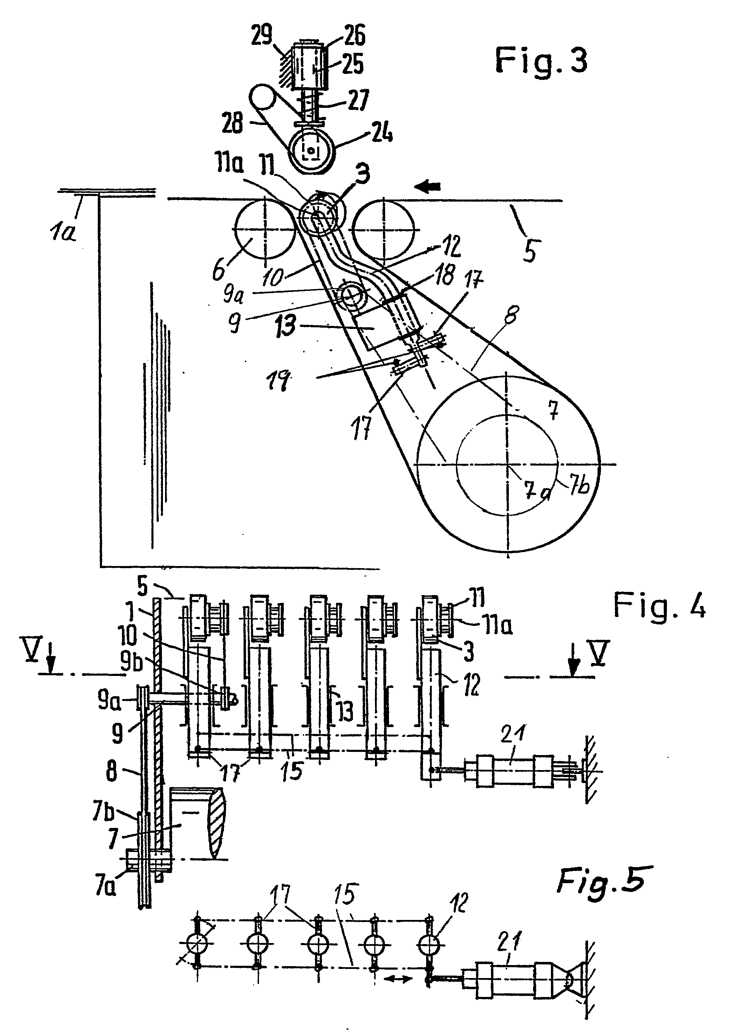

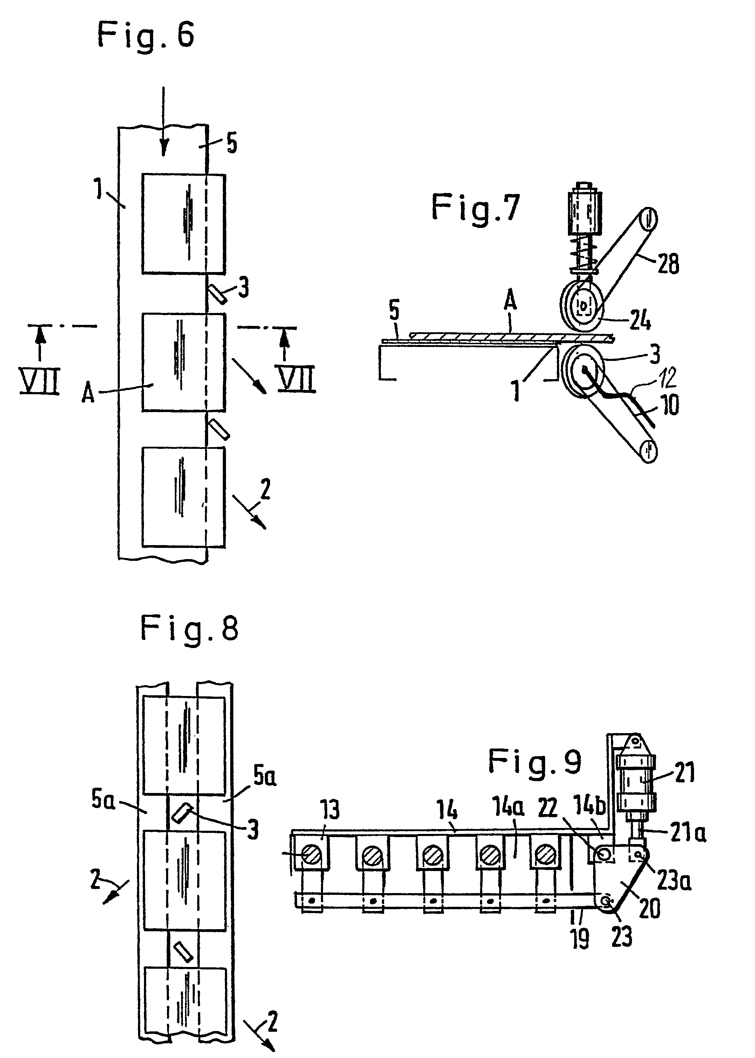

Der Hauptförderer 1 hat in Fig. 3 erkennbare Tragplatten 1a für das Förderband 5, das im Bereich der Austragscheiben 3 um Umlenkrollen 6 und eine Umlenktreibrolle 7 geführt ist. Auf der Welle 7a der Umlenktreibrolle 7 ist neben dem Hauptförderer 1 eine Treibscheibe 7b für einen elastischen Treibgurt 8 angeordnet, der über eine Scheibe 9a eine Welle 9 mit mehreren Treibscheiben 9b treibt. Diese treiben je über einen Treibriemen 10 eine Riemenscheibe 11, die mit ihrer zugeordneten Austragscheibe 3 bzw. 3a zusammen über eine gemeinsame Achse 11a an einer um eine schräg liegende Achse verschwenkbaren, abgekröpften Schwenk-Hub-Stange 12 gelagert ist. Diese Schwenk-Hub-Stangen 12 sind in einer Reihe angeordnet und mit Lagern 13 an einem Lagerträger 14 gelagert, der an einer in den Hauptförderer 1 eingesetzten Lagereinheit 30 angeordnet ist. Die Schwenk-Hub-Stangen 12 sind mit eingelassenen Sprengringen 18 an den Lagern 13 axial festgelegt. Jede schrägliegende Schwenk-Hub-Stange 12 hat unterhalb des Lagers nach vorne und nach hinten gerichtete Hebelarme 17 für den Angriff zweier vorgespannter Riemen 15, die alle Schwenk-Hub-Stangen 12 einer Reihe von Austragsscheiben 3 miteinander verbinden. Da die Schwenk-Hub-Stangen 12 abgekröpft sind, werden die Austragsscheiben 3, die bei der O-Lage unterhalb der Oberkante des Förderbandes 5 liegen, beim Zug des Treibriemens 15 über die Hebelarme 17 und die gekröpften Schwenk-Hub-Stangen über die Oberfläche des Förderbandes 5 hinausgehoben und in Abförderrichtung schräggestellt. Wie in Figur 5 zu erkennen, ist einer der Hebel 17 verlängert und wird von dem Stellmotor 21 verschwenkt. Damit das Fördergut entsprechend dem Ausschleusbefehl auf den gewünschten Sortierförderer 2 gebracht wird, hat dieser erforderlichenfalls eine vorgelagerte Mitnehmerwelle 2a.

Bei Förderanlagen zum Transport flacher Materialien wie Zeitungen, dünne Bleche oder Hölzer können oberhalb der Austragsscheiben 3 in Fig. 3 gezeichnete Friktionsscheiben 24 angeordnet sein. Sie sind auf Wellen 25 gelagert, die in Buchsen 26 geführt und entgegen dem Druck von Federn 27 axial verschiebbar sind. Die Friktionsscheiben 24 können über Riemen 28 mit einem nicht näher gezeichneten Antrieb verbunden sein. Die Wellen 25 können drehbar in den Buchsen gelagert sein, die an einem Träger 29 befestigt sind. Die federnden Friktionsscheiben verhindern ein Hochspringen dünner Teile, die sich sonst aufgrund ihrer kinetischen Energie in der bisherigen Richtung weiterbewegen könnten.

Beim Ausführungsbeispiel nach den Fig. 6 und 7 ragt das Fördergut "A" einseitig über das auf dem Hauptförderer 1 gleitende Förderband 5 hinaus und kann zum Ausschleusen auf den Sortierförderer 2 angehoben werden, wenn die entsprechende Austragscheibe 3 angehoben wurde. Die Austragscheiben 3 sind direkt neben der Hauptförderbahn 1 vor den Sortierförderern 2 angeordnet und schieben das Fördergut auf diesen, wobei die über den Austragscheiben 3 angeordneten Friktionsscheiben 24 das bloße Anheben des Fördergut-Randes verhindern. Die neben der Förderbahn angeordneten Austragscheiben 3 können auch unbeabsichtigt verschobenes Fördergut wieder auf den Hauptförderer zurückleiten.

Beim Ausführungsbeispiel nach Fig. 8 ist das Förderband in zwei Seitenstreifen aufgeteilt. Im freien mittleren Bereich sind die heb- und senkbaren sowie schwenkbaren Austragscheiben 3 angeordnet zum Ausschleusen der Fördergüter "A" zum linken oder rechten Sortierförderer 2.

Fig. 9 zeigt ein Ausführungsbeispiel, bei dem alle Schwenk-Hub-Stangen 12 nur einen Hebelarm 17 haben, die mit einer Koppelstange 19 verbunden sind. Diese ist mittels eines Mitnehmerstiftes 23 mit einem Eckhebel 20 verbunden, der mit einem Lagerbolzen 22 an einem Lagerauge 14b des Lagerträgers 14 schwenkbar gelagert ist und an den ein Stellmotor 21 mit seiner Kolbenstange 21a mittels eines Mitnehmerstiftes 23a angreift. Der Stellmotor 21 ist in Fig. 9 in der Mittellage gezeichnet und kann seine Kolbenstange 21a einziehen und ausfahren, wobei der Eckhebel 20 um seinen Lagerpunkt 22 verschwenkt wird und über seinen Mitnehmerstift 23 die Koppelstange 19 nach links oder rechts verschwenkt. Dabei werden auch über die Hebelarme 17 mit der Koppelstange 19 verbundenen Schwenk-Hub-Stangen 12 mit ihren Austragsscheiben 3 verschwenkt und über das Förderband 5 hinaus angehoben, damit das Fördergut entsprechend dem Ausschleusbefehl auf den gewünschten Sortierförderer 2 gebracht wird, wo es von der erforderlichenfalls vorgelagerten Mitnehmerwelle 2a erfaßt wird.

## Patentansprüche

1. Förderanlage mit von einem Hauptförderer (1) abzweigenden Sortierförderern (2) und in dem Hauptförderer vor jedem Sortierförderer angeordneten, heb- und senkbaren, in Ausschleusrichtung weisenden Ausschleusscheiben (3), dadurch gekennzeichnet, daß jede der Ausschleusscheiben (3) mit ihrer Achse (11a) an einer geneigten und schräg nach unten abgebogenen Schwenk-Hub-Stange (12) gelagert ist, die drehbar und axial unverschiebbar in einer Lagerung (13) angeordnet ist.

2. Förderanlage nach Anspruch 1, dadurch gekennzeichnet, daß die Schwenk-Hub-Stange (12) in Förderrichtung geneigt und vermindert ansteigend abgekröpft ist.

3. Förderanlage nach Anspruch 1 oder 2, dadurch gekennzeichnet, daß mehrere Schwenk-Hub-Stangen (12) quer zur Förderrichtung nebeneinander in dem Hauptförderer (1) angeordnet sind und nach vorne und/oder hinten gerichtete Hebel (17) für den Angriff einer quer zum Hauptförderer (1) liegenden, gemeinsamen Schwenkverbindung haben.

4. Förderanlage nach Anspruch 3, dadurch gekennzeichnet, daß die Schwenkverbindungen zwei die jeweils nach vorne und/oder hinten gerichteten Hebel (17) miteinander verbindende, vorgespannte Riemen (15) sind, und daß ein in beide Richtungen arbeitender Stellmotor an einem der äußeren Hebel (17) angreift.

5. Förderanlage nach Anspruch 3, dadurch gekennzeichnet, daß die Schwenkverbindung eine Koppelstange (19) ist, die über einen Mitnehmerstift (23) mit einem Eckhebel (20) verbunden ist, der neben den Schwenkwellen (12) mit einem senkrechten Lagerbolzen (22) an einem Lagerträger (14) gelagert ist und an dem eine Kolbenstange (21a) eines mit seiner Längsachse parallel zum Hauptförderer (1) angeordneten Stellmotors (21) mit einem Mitnehmerstift (23a) angreift.

6. Förderanlage nach Anspruch 5, dadurch gekennzeichnet, daß der Eckhebel (20) mit den Bohrungen für den Lagerbolzen (22) und die Mitnehmerstifte (23, 23a) ein Dreieck bildet.

7. Förderanlage nach Anspruch 1, dadurch gekennzeichnet, daß ein Förderband (5) vor den Anschlußstellen der Sortierförderer (2) U-förmig um unter dem Förderband (5) angeordnete Umlenkrollen (6) und um eine tiefer liegende Umlenktreibrolle (7) geführt ist, auf deren Achse (7a) eine Treibscheibe (7b) für einen dehnbaren Treibgurt (8) befestigt ist, der eine Scheibe (9a) treibt, auf deren Welle (9) Treibscheiben (9b) für Treibriemen (10) befestigt sind, die um den Austragscheiben (3) zugeordnete, mit ihren Achsen (11a) an den Schwenkwellen (12) gelagerte Riemenscheiben (11) geführt sind.

8. Förderanlage nach Anspruch 7, dadurch gekennzeichnet, daß die Teile der Hub- und Schwenkvorrichtung für die Austragscheiben (3) im Raum über der Umlenktreibrolle (7) zwischen den Umlenkrollen (6) angeordnet sind.

9. Förderanlage nach Anspruch 1, dadurch gekennzeichnet, daß eine Austragscheibe (3) neben dem Hauptförderer (1) vor dem Sortierförderer (2) angeordnet ist.

10. Förderanlage nach Anspruch 7, dadurch gekennzeichnet, daß das Förderband in zwei Seitenstreifen (5a) unterteilt ist, zwischen denen die Austragscheiben (3) angeordnet sind.

11. Förderanlage nach einem oder mehreren der vorgenannten Ansprüche, dadurch gekennzeichnet, daß über den Austragscheiben (3) mit diesen bezüglich der Ausschleusrichtung übereinstimmende Friktionsscheiben (24) angeordnet sind.

12. Förderanlage nach Anspruch 11, dadurch gekennzeichnet, daß die Friktionsscheiben (24) an senkrechten Wellen (25) gelagert sind, die entgegen der Kraft von Federn (27) in einer an einem Träger (29) befestigten Buchse (26) heb- und senkbar gelagert sind.

## Claims

1. A conveyor system comprising sorting conveyors (2) which branch from a main conveyor (1), and discharging discs (3) which can be raised and lowered, face towards the discharging direction, and are arranged in the main conveyor in front of each sorting conveyor, characterised in that the axis (11a) of each of the discharging discs (3) is mounted on an inclined pivoting-lifting rod (12) which is bent so as to slope downwards and which is arranged in a bearing (13) so as to be rotatable but axially immovable.

2. A conveyor system according to claim 1, characterised in that the pivoting-lifting rod (12) is inclined in the conveying direction and is cranked so as to reduce its upward extent.

3. A conveyor system according to claim 1 or claim 2, characterised in that a plurality of pivoting-lifting rods (12) are arranged one beside another in the main conveyor (1) transversely to the conveying direction and are provided with forwardly and/or backwardly directed levers (17) which engage with a common pivoting coupling which extends transversely to the main conveyor (1).

4. A conveyor system according to claim 3, characterised in that the pivoting couplings consist of two tensioned belts (15) which interconnect the forwardly and/or backwardly directed levers (17) and that a servo-motor, operating in both directions, act upon one of the outer levers (17).

5. A conveyor system according to claim 3, characterised in that the pivoting coupling is a coupling rod (19) which is connected via a carrier pin (23) to a bellcrank (20) which, in addition to the pivoting shafts (12), is mounted by means of a vertical bearing pin (22) on a bearing carrier (14) and which engages via a carrier pin (23a) with a piston (21a) of a servo-motor (21), whose longitudinal axis extends in parallel to the main conveyor (1).

6. A conveyor system according to claim 5, characterised in that the bellcrank (20) forms a triangle with the bores for the bearing pin (22) and the carrier pins (23, 23a).

7. A conveyor system according to claim 1, characterised in that a conveyor belt (5) in front of the connection points of the sorting conveyors (2) extends in a U-shape around deflecting rollers (6), arranged beneath the conveyor belt (5), and around a lower positioned deflecting drive roller (7) to the axle (7a) of which there is attached a drive pulley (7b) for an extending drive belt (8) which drives a pulley (9a) to whose shaft (9) there are attached drive pulleys (9b) for drive belts (10) which extend around pulleys (11) which are assigned to the discharging discs (3) and whose axes (11a) are mounted on the pivoting shafts (12).

8. A conveyor system according to claim 7, characterised in that the parts of the lifting and pivoting device for the discharging discs (3) are arranged in the space above the deflecting drive roller (7) between the deflecting rollers (6).

9. A conveyor system according to claim 1, characterised in that a discharging disc (3) is arranged next to the main conveyor (1) in front of the sorting conveyor (2).

10. A conveyor system according to claim 7, characterised in that the conveyor belt is divided into two lateral strips (5a) between which are arranged the discharging discs (3).

11. A conveyor system according to one or more of the preceding claims, characterised in that above whose discharging discs (3) are arranged friction discs (24) the discharging direction is identical to that of the discharging discs (3).

12. A conveyor system according to claim 11, characterised in that the friction discs (24) are mounted on vertical shafts (25) which are mounted so that they can be raised and lowered against the force of springs (27) in a bush (26) attached to a carrier (29).

## Revendications

1. Installation de transport comprenant des transporteurs de tri (2) en dérivation d'un transporteur principal (1) et des disques d'éjection (3) relevables et abaissables, tournés dans le sens de l'éjection, disposés dans le transporteur principal devant chaque transporteur de tri, caractérisée en ce que chaque disque d'éjection (3) est monté avec son axe (11a) sur une tige de pivotement et de levage (12) inclinée et recourbée en biais vers le bas, qui est disposée de façon tournante et axialement immobile dans un agencement de palier (13).

2. Installation de transport selon la revendication 1, caractérisée en ce que la tige de pivotement et de levage (12) est inclinée dans le sens du transport et coudée en montant d'une manière atténuée.

3. Installation de transport selon la revendication 1 ou 2, caractérisée en ce que plusieurs tiges de levage et de pivotement (12) sont disposées les unes à côté des autres dans le transporteur principal (1), transversalement au sens du transport, et possèdent des leviers (17) orientés vers l'avant et/ou vers l'arrière pour agir sur une liaison de pivotement commune, située transversalement au transporteur principal (1).

4. Installation de transport selon la revendication 3, caractérisée en ce que les liaisons de pivotement sont deux courroies (15) précontraintes, reliant l'un à l'autre les leviers (17) orientés vers l'avant et/ou vers l'arrière, et en ce qu'un servomoteur travaillant dans les deux sens agit sur l'un des leviers extérieurs (17).

5. Installation de transport selon la revendication 3, caractérisée en ce que la liaison de pivotement est une tige d'accouplement (19), qui est reliée par une tige d'entraînement (23) à un levier de renvoi (20), qui est monté, à côté des arbres de pivotement (12) par un axe de palier (22) perpendiculaire, sur un support de paliers (14) et sur lequel une tige de piston (21a) d'un servomoteur (21) disposé avec son axe longitudinal parallèle au transporteur principal (1) agit, par une tige d'entraînement (23a).

6. Installation de transport selon la revendication 5, caractérisée en ce que le levier de renvoi (20) forme un triangle avec les alésages destinés à l'axe de palier (22) et aux tiges d'entraînement (23, 23a).

7. Installation de transport selon la revendication 1, caractérisée en ce qu'une bande transporteuse (5) est guidée avant les points de raccordement des transporteurs de tri (2), en forme de U, autour de galets de renvoi (6) disposés au-dessous de la bande transporteuse (5) et autour d'un galet moteur de renvoi (7) placé plus bas, sur l'axe (7a) duquel est fixée une poulie motrice (7b) destinée à une courroie motrice extensible (8), entraînant une poulie (9a), sur l'arbre (9) de laquelle sont fixées des poulies d'entraînement (9b) pour des courroies motrices (10), qui sont guidées autour de poulies (11) montées avec leurs axes (11a) sur les arbres de pivotement (12) et associées aux disques d'évacuation (3).

8. Installation de transport selon la revendication 7, caractérisée en ce que les parties du dispositif de levage et de pivotement destinées aux disques d'évacuation (3) sont disposées dans l'espace situé au-dessus du galet moteur de renvoi (7), entre les galets de renvoi (6).

9. Installation de transport selon la revendication 1, caractérisée en ce qu'un disque d'évacuation (3) est disposé à côté du transporteur principal (1), devant le transporteur de tri (2).

10. Installation de transport selon la revendication 7, caractérisée en ce que la bande transporteuse est subdivisée en deux bandes latérales (5a), entre lesquelles sont disposés les disques d'évacuation (3).

11. Installation de transport selon une ou plusieurs des revendications précédentes, caractérisée en ce que des disques de friction (24) sont disposés au-dessus des disques d'évacuation (3), disques de friction (24) dont le sens d'éjection coïncide avec ceux-ci.

12. Installation de transport selon la revendication 11, caractérisée en ce que les disques de friction (24) sont montés sur des arbres verticaux (25) qui sont montés de façon relevable et abaissable contre l'action de ressorts (27) dans une douille (26) fixée à un support (29).

Fig. 2

Fig. 1

Fig. 3

Fig. 4

Fig. 5

# Fig.6

# Fig.7

# Fig.8

# Fig.9